**Europäisches Patentamt**

**European Patent Office**

**Office européen des brevets**

(19)

(11) Veröffentlichungsnummer: **0 018 438**
**B1**

(12) # EUROPÄISCHE PATENTSCHRIFT

(45) Veröffentlichungstag der Patentschrift: **16.02.83**

(21) Anmeldenummer: **79104249.2**

(22) Anmeldetag: **31.10.79**

(51) Int. Cl.³: **F 16 K 11/06, F 16 K 47/02**

(54) **Sanitäres Wasserventil.**

(30) Priorität: **08.05.79 DE 2918430**

(43) Veröffentlichungstag der Anmeldung:
**12.11.80 Patentblatt 80/23**

(45) Bekanntmachung des Hinweises auf die Patenterteilung:
**16.02.83 Patentblatt 83/7**

(84) Benannte Vertragsstaaten:
**AT BE CH FR GB IT NL SE**

(56) Entgegenhaltungen:
**US - A - 3 920 043**

(73) Patentinhaber: **IDEAL-STANDARD GMBH**
**Euskirchener Strasse 80**
**D-5300 Bonn 1 (DE)**

(72) Erfinder: **Nikolayczik, Hans**
**Moselstrasse 35**
**D-5561 Minheim (DE)**

Courier Press, Leamington Spa, England.

Sanitäres Wasserventil

Die Erfindung bezieht sich auf ein Sanitäres Wasserventil, bestehend aus einem Ventilkörper mit aus mindestens zwei Scheiben gebildeten Steuerelementen, von denen die erste Scheibe drehfest angeordnet und mit den Einlaßöffnungen versehen ist, die auf der einen Seite an die Wasserleitung angeschlossen und auf der anderen Seite gegen die zweite Scheibe gerichtet sind, welche auf der ersten Scheibe beweglich angeordnet ist und einen Oberflächenkanal für Umlenkfunktionen aufweist, der gleichzeitig mit den Einlaßöffnungen und einer ebenfalls in der ersten Scheibe befindlichen Auslaßöffnung in Überdeckung bringbar ist, und in dem sich ein oder mehrere Siebe befinden.

In DE—A—23 56 326 ist bereits ein geräuschdämpfendes—in einem bestimmten Abstand zum Boden des Oberflächenkanals angeordnetes—Sieb vorgesehen. Das Sieb wird dabei zwischen zwei an den Seitenwandungen des Oberflächenkanals anliegenden Ringteilen gehalten, von denen der eine Ringteil als Abstandhalter für die Festlegung der Distanz zwischen dem Sieb und dem Boden des Oberflächenkanals dient, während der andere Ringteil zur Siebbefestigung dient. Außer dem eigentlichen Sieb werden also zusätzlich zwei Ringteile benötigt für die Positionierung und Befestigung des Siebes in dem Oberflächenkanal.

Ferner sind bereits aus einem Stück gebildete und nach Art eines Korbes gestaltete Siebe bekannt, wobei das offene Ende des Siebkorbes sich auf dem Boden des Oberflächenkanals abstützt (siehe DE—A—26 22 179). Die Seitenwandung des Siebkorbes dient also gleichzeitig zur Abstandshalterung. Die Befestigung des Siebes erfolgt jedoch wiederum über einen separaten Ringteil.

Bekannt sind weiterhin Ausführungen, bei denen ein flaches Sieb zwischen einem derartigen Ringteil und einer umlaufenden Schulter im Oberflächenkanal gehalten ist.

Es hat sich gezeigt, daß die Verwendung separater Ringteile relativ kostenaufwendig ist. Hinzu kommt, daß die Einhaltung bestimmter Fertigungstoleranzen bei aus keramischem Material gebildeten Steuerscheiben Schwierigkeiten bereitet, was bei der bisherigen Siebmontage zu Problemen führen kann.

Der Erfindung liegt die Aufgabe zugrunde, durch eine einfachere Ausgestaltung und Anordnung des bzw. der Siebe den Kostenaufwand zu verringern und die genannten Montageprobleme zu beseitigen.

Die Erfindung löst diese Aufgabe dadurch, daß das Sieb selbstklemmend in dem Oberflächenkanal angeordnet ist. Das Sieb besteht vorteilhafterweise aus einem Kunststoff- oder Metallgewebe.

Ein erfindungsgemäßes Sieb wird einfach mittels einer Vorrichtung in den Oberflächenkanal gedrückt und hält sich infolge seiner selbstklemmenden Ausgestaltung allein.

In der Zeichnung ist der Erfindungsgegenstand in zwei Ausführungsbeispielen dargestellt; und zwar zeigen:

Fig. 1 ein sanitäres Wasserventil in Form einer Mischbatterie im Längsschnitt und im geöffneten Zustand,

Fig. 2 eine Draufsicht von unten auf die mit dem Oberflächenkanal versehene obere Scheibe mit einer strichpunktierten Darstellung der unteren Scheibe im geöffneten Zustand für kaltes Wasser,

Fig. 3 einen Längsschnitt gemäß Linie II—II der Fig. 2,

Fig. 4 ein selbstklemmendes Sieb in der Draufsicht,

Fig. 5 das Sieb im Schnitt gemäß der Linie III—III der Fig. 4, und

Fig. 6 das Sieb im Schnitt gemäß der Linie IV—IV der Fig. 4.

Fig. 7 ein Sieb einer zweiten Ausführungsform in Schnitt.

Darin ist mit 4 der Ventilkörper eines sanitären Wasserventiles bezeichnet, der ein kartuschenartiges Gehäuse 5 mit aus zwei Scheiben 6 und 7 gebildeten Steuerelementen aufnimmt. Die Scheibe 6 ist fest angeordnet. Sie weist zwei Einlaßöffnungen 8, 9 für kaltes und warmes Wasser auf sowie eine zu einem Auslauf 10 führende Auslaßöffnung 11 für das Mischwasser. Die Scheibe 7 ist auf der Scheibe 6 durch einen mit einem Griff 12 in Verbindung stehenden Steuerhebel 13 verschiebund schwenkbar angeordnet und besitzt einen Oberflächenkanal 14 für Misch- und Umlenkfunktionen, der mit den Einlaßöffnungen 8, 9 und mit der Auslaßöffnung 11 in unterschiedlichem Maße in Überdeckung bringbar ist.

Wie ersichtlich, ist in dem Oberflächenkanal 14 ein Sieb 15 angeordnet. Das Sieb 15 besteht aus einem elastischen Gewebematerial, z.B. Metall, Kunststoff, Gummi oder dergl. Das Sieb 15 ist selbstklemmend in dem Oberflächenkanal angeordnet.

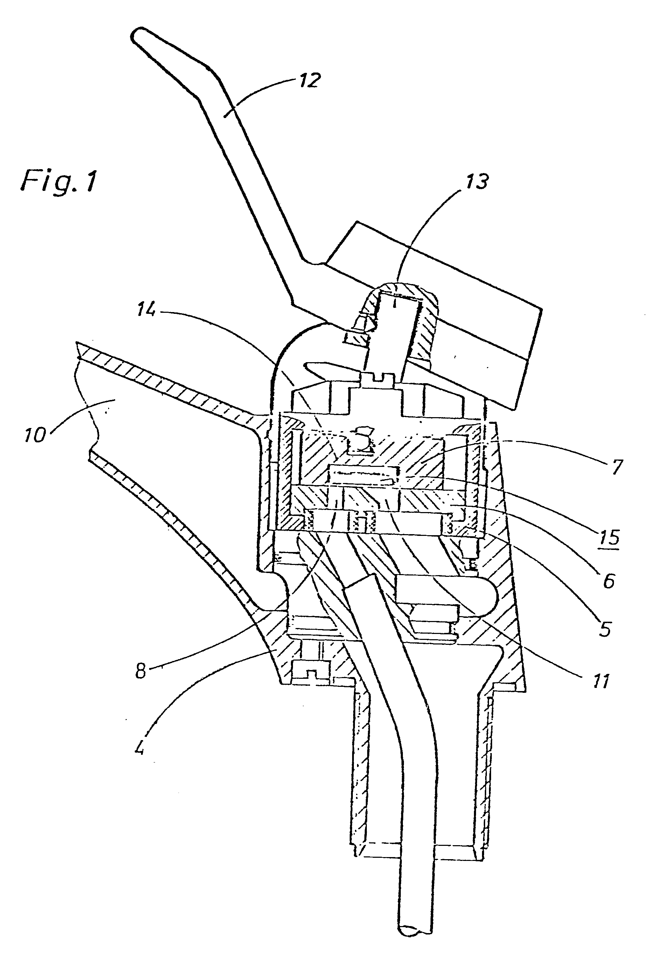

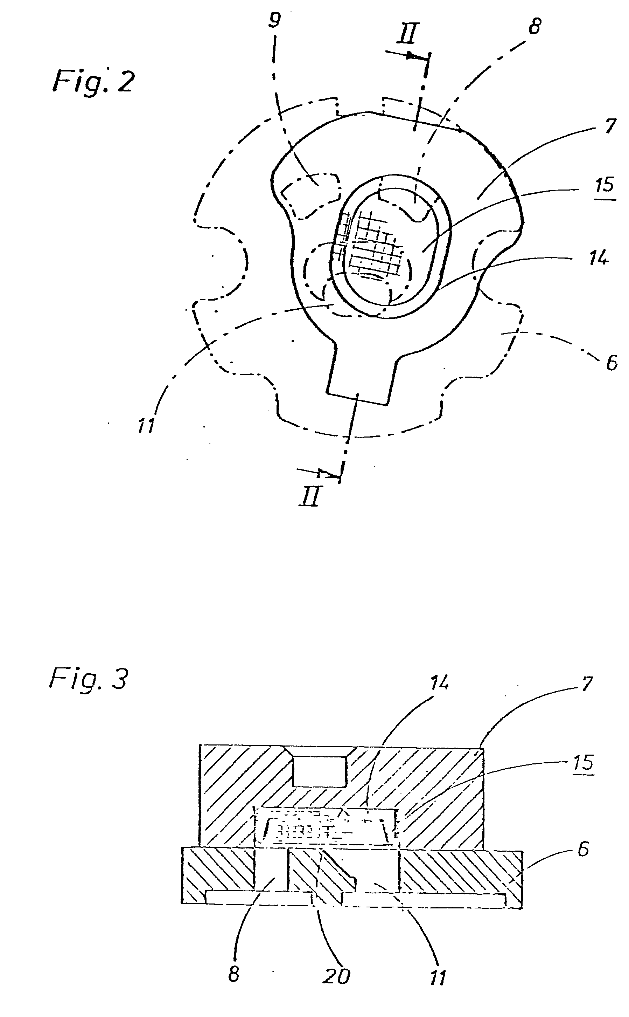

Es ist gemäß den Fig. 1 bis 6 aus einem Stück gebildet und nach Art eines Korbes gestaltet. Im nicht eingebauten Zustand weist das Sieb 15 einen konischen äußeren Ringteil 16 sowie einen konischen inneren Ringteil 17 auf, der einerseits in den Siebboden 19 übergeht und andererseits mit dem äußeren Ringteil 16 eine Klemmwulst 18 bildet, deren Durchmesser größer ist als der des Oberflächenkanals 14.

Das Sieb wird z.B. mittels eines an die Klemmwulst 18 angreifenden Kolben-Stempels um einen vorbestimmten Betrag in den Oberflächenkanal gedrückt. Dabei legt sich die Klemmwulst unter Spannung an die Wandung des Oberflächenkanals 14 an. Die Geräuschdämpfung ist um so größer, je kleiner der Abstand zwischen der Klemmwulst 18 und den Dichtflächen der Scheiben 6, 7 ist. Das Sieb 15 kann aber auch mittels einer balligen Kunststoff- oder Hartgummirolle in den Oberflächenkanal 14 gedrückt werden.

Im Betrieb werden die über die Einlaßöffnungen 8 und 9 der unteren Scheibe 6 eintretenden Wasserströme auf ihrem Weg zum Umlenkungsbereich gegen das Sieb 15 geführt und ganz oder teilweise fein zerteilt. Auf diese Weise wird eine weiche Mischwasserströmung umgelenkt, woraus sich eine deutliche Verminderung der Geräuschbildung ergibt.

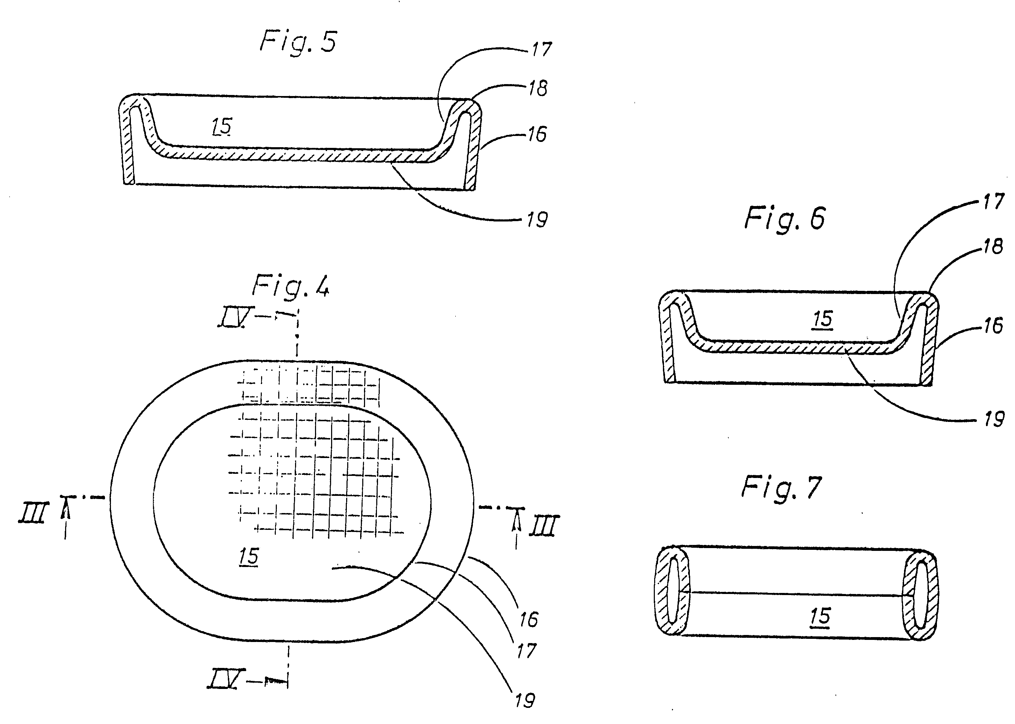

Im Rahmen des erfindungsgemäßen Grundgedankens sind insbesondere in bezug auf die spezielle Anordnung und Gestaltung des siebes auch noch andere Möglichkeiten gegeben. Gemäß dem zweiten Ausführungsbeispiel nach der Fig. 7 könnte das Sieb 15 auch als Hohlring ausgebildet sein. Ferner könnten erfindungsgemäße Siebe auch bei solchen Wasserventilen zum Einsatz kommen, die mit mehr als zwei scheibenförmigen Steuerelementen ausgerüstet sind.

## Patentansprüche

1. Sanitäres Wasserventil, bestehend aus einem Ventilkörper (4) mit aus mindestens zwei Scheiben (6, 7) gebildeten Steuerelementen, von denen die erste Scheibe (6) drehfest angeordnet und mit den Einlaßöffnungen (8, 9) versehen ist, die auf der einen Seite an die Wasserleitung angeschlossen und auf der anderen Seite gegen die zweite Scheibe (7) gerichtet sind, welche auf der ersten Scheibe (6) beweglich angeordnet ist und einen Oberflächenkanal (14) für Umlenkfunktionen aufweist, der gleichzeitig mit den Einlaßöffnungen (8, 9) und einer ebenfalls in der ersten Scheibe befindlichen Auslaßöffnungen (11) in Überdeckung bringbar ist, und in dem sich ein oder mehrere Siebe (15) befinden, dadurch gekennzeichnet, daß ein aus einem Stück gebildetes und nach Art eines Korbes gestaltetes Sieb (15) aus elastischem Material vorgesehen ist, welches in nicht eingebautem Zustand einen konischen äußeren Ringteil (16) sowie einen konischen inneren Ringteil (17) aufweist, der einerseits in den Siebboden (19) übergeht, und andererseits mit dem äußeren Ringteil (16) eine Klemmwulst (18) bildet, deren Durchmesser größer ist als der des Oberflächenkanals (14), so daß das Sieb (15) selbstklemmend im Oberflächenkanal (14) angeordnet werden kann.

2. Sanitäres Wasserventil, bestehend aus einem Ventilkörper (14) mit aus mindestens zwei Scheiben (6, 7) gebildeten Steuerelementen, von denen die erste Scheibe (6) drehfest angeordnet und mit den Einlaßöffnungen (8, 9) versehen ist, die auf der einen Seite an die Wasserleitung angeschlossen und auf der anderen Seite gegen die zweite Scheibe (7) gerichtet sind, welche auf der ersten Scheibe (6) beweglich angeordnet ist und einen Oberflächenkanal (14) für Umlenkfunktionen aufweist, der gleichzeitig mit den Einlaßöffnungen (8, 9) und einer ebenfalls in der ersten Scheibe befindlichen Auslaßöffnung (11) in Überdeckung bringbar ist, und in dem sich ein oder mehrere Siebe (15) befinden, dadurch gekennzeichnet, daß das Sieb (15) als Hohlring ausgebildet ist und selbstklemmend im Oberflächenkanal (14) angeordnet werden kann.

3. Sanitäres Wasserventil nach den Ansprüchen 1 oder 2, dadurch gekennzeichnet, daß das Sieb (15) aus Gewebematerial besteht.

4. Sanitäres Wasserventil nach den Ansprüchen 1 oder 2 dadurch gekennzeichnet, daß das Sieb (15) aus Kunststoff besteht.

5. Sanitäres Wasserventil nach den Ansprüchen 1 oder 2 dadurch gekennzeichnet, daß das Sieb (15) aus Metall besteht.

## Revendications

1. Robinet à eau pour appareils sanitaires composé d'un corps de robinet et d'organes de commande formés de deux ou plus de deux plateaux, dont le premier est fixe en rotation et pourvu des orifices d'admission raccordés d'un côté à la canalisation d'eau, tandis que l'autre face desdits orifices est orientée vers le second plateau, mobile sur le premier et qui comporte un canal assurant la conduite de l'eau et pouvant communiquer simultanément avec les orifices d'admission, et un orifice de départ également ménagé dans le premier plateau, ledit canal pouvant être placé en coïncidence avec l'orifice de sortie du premier disque et contenant un ou plusieurs tamis, ledit robinet étant caractérisé par la présence d'un tamis (15) monobloc en un matériau élastique, ayant la configuration d'un panier, qui, avant son montage, comporte une bague extérieure (16) à profil conique et une partie annulaire intérieure (17) de forme tronconique, cette dernière se raccordant au fond (19) du tamis, tandis que la bague extérieure (16) forme un bourrelet de blocage dont le diamètre est supérieur à celui du canal (14), de telle sorte que le tamis (15) puisse être inséré dans ledit canal (14) par autoblocage.

2. Robinet à eau pour appareils sanitaires composé d'un corps de robinet et d'organes de commande formés de deux ou plus de deux plateaux, dont le premier est fixe en rotation et pourvu des orifices d'admission raccordés d'un côté à la canalisation d'eau, tandis que l'autre face desdits orifices est orientée vers le second plateau, mobile sur le premier et qui comporte un canal assurant la conduite de l'eau et pouvant communiquer simultanément avec les orifices d'admission, et un orifice de départ également ménagé dans le premier plateau, ledit canal pouvant être placé en coïncidence avec l'orifice de sortie du premier disque et contenant un ou plusieurs tamis, ledit robinet étant caractérisé en ce que le tamis a la forme d'une bague creuse (15) pouvant être insérée à l'intérieur du canal (14) et maintenue par auto-blocage.

3. Robinet à eau selon les revendications 1 ou 2, caractérisé en ce que le tamis (15) est en matériau tissé.

4. Robinet à eau selon les revendications 1 ou 2, caractérisé en ce que le tamis (15) est en matière plastique.

5. Robinet à eau selon les revendications 1 ou 2, caractérisé en ce que le tamis (15) est en métal.

## Claims

1. Sanitary water valve consisting of a valve body (4) with control elements formed from at least two discs (6, 7), the first of which discs (6) is fixedly disposed and is provided with the inlet apertures (8, 9) which are attached on the one side to the water supply pipes and on the other side are directed against the second disc (7), which is movably arranged on the first disc (6) and has a surface duct (14) for deflecting functions, which can be brought to overlap simultaneously the inlet structure (8, 9) and an outlet aperture (11) also in the first disc, and in which there is one or more than one sieve (15), characterised in that a sieve (15) of resilient material formed from one piece and shaped like a kind of basket is provided, which in the non-mounted state has a conical outer annular portion (16) as well as a conical inner annular portion (17) which passes on the one side into the sieve bottom (19) and on the other side forms, with the outer annular portion (16), a clamping rim (18) whose diameter is greater than that of the surface duct (14), so that the sieve (15) can be disposed in self-retaining fashion in the surface duct (14).

2. Sanitary water valve, consisting of a valve body (4) with control elements formed from at least two discs (6, 7), the first of which discs (6) is fixedly disposed and is provided with the inlet apertures (8, 9) which are attached on the one side to the water supply pipes and on the other side are directed against the second disc (7), which is movably arranged on the first disc (6) and has a surface duct (14) for deflecting functions which can be brought to overlap simultaneously the inlet apertures (8, 9) and an outlet aperture (11), also in the first disc, and in which there is one or more than one sieve (15), characterised in that the sieve (15) is constructed as a hollow ring and can be disposed in self-retaining fashion in the surface duct (14).

3. Sanitary water valve according to claims 1 or 2, characterised in that the sieve (15) is made of mesh material.

4. Sanitary water valve according to claims 1 or 2, characterised in that the sieve (15) is made of plastic.

5. Sanitary water valve according to claims 1 or 2, characterised in that the sieve (15) is made of metal.

*Fig.1*

*Fig. 2*

*Fig. 3*

Fig. 5

17
18
15
16
19

Fig. 6

17
18
15
16
19

Fig. 4

IV
III — III
15
IV
16
17
19

Fig. 7

15